# EUROPEAN PATENT APPLICATION

(11) **EP 4 817 840 A1**
(43) Date of publication of application: **07.10.2026**
(21) Application number: 25167447.9
(22) Date of filing: 31.03.2025
(51) Int. Cl.: B29C 41/00, B32B 27/32, C08K 5/103, C08L 27/06

(54) **LOW TEMPERATURE POLYVINYL CHLORIDE MOLDING COMPOSITION**

(71) Applicant: MCPP Innovation LLC, Tokyo 100-8251 (JP)
(72) Inventor: DERA, Rafael, Chiyoda-ku, 100-8251 (JP); MATSUMOTO, Kazuki, Chiyoda-ku, 100-8251 (JP); YOSHIHARA, Takaku, Chiyoda-ku, 100-8251 (JP)
(74) Representative: V.O.

(57) **Abstract**

A polyvinyl chloride molding composition comprising:
a) At least one polyvinyl chloride resin having a K value ≥ 60;
b) At least one plasticizer;
c) Optionally at least one linear polyester polymer derived from caprolactone monomers and having an average molecular weight in the range of 15000 to 40000 g/mol;
d) At least one surfactant selected from a non-ionic surfactant and/or anionic surfactant having a melting temperature (Tₘ) below the molding temperature, preferably below 200°C and average molecular weight above 300g/mol; and
e) Optionally further additives.

## Description

### FIELD OF INVENTION

The current invention is related to polyvinyl chloride (PVC) molding compositions which can be processed at lower molding temperatures. The PVC compositions according to the invention are suitable for manufacturing molded products such as flexible molded skins at a lower temperature compared to conventional PVC molding compositions thereby maintaining or even improving the mechanical properties such elongation at break and tensile strength of the molded parts.

The current invention relates to a PVC molding composition, a method for manufacturing the PVC molding composition according to the invention as well as a method for manufacturing a molded product using the PVC composition according to the invention at a lower temperature while maintaining mechanical properties of the molded part such as elongation at break.

The present invention further pertains to the use of the PVC molded parts according to the invention as flexible molded skins, more in particular but not limited as flexible molded skins in a transportation vehicle interior such as a dashboard.

### BACKGROUND OF THE INVENTION

Polyvinyl chloride (PVC) homopolymers and copolymers are the most widely employed polymers in industry. These homopolymers and copolymers can be used in multiple products, from thin surgeon's gloves to rigid durable pipe. When designing a PVC molding composition multiple components can be added to provide processability and melt characteristics required for a particular process. Typical examples of such components are stabilizers, plasticizers, processing aids, lubricants, colorants, and/or fillers.

Polyvinyl chloride (commonly referred to as "PVC") has been used for a number of years in the manufacture of soft, flexible films for example in food packaging or automative applications, in molded rigid products (such as pipes, fibers, upholstery and bristles), and in a variety of other products, including electric wire and cable-coverings, film finishes for textiles, raincoats, belting, gaskets and shoe soles.

The manufacturing of PVC-products overall requires heating a mold like for example a PVC slush mold, to a temperature above 230°C which in turn needs to be cooled to at least a temperature below 60°C to remove the molded parts from the mold. Such temperature swings are time consuming and therefore reduce productivity and/or efficiency. Additionally, the temperature swings may damage the mold, and hence a mold may need to be replaced in shorter time, which may negatively influence productivity and/or efficiency.

Known automotive applications of PVC polymers are vehicle trim panels, door panels, dashboards, instrument panels etc. are widely known in the automotive industry. In general, the structural integrity to the panel is provided by a rigid carrier. Followed by a layer of a compressible foam applied on top of the rigid carrier, typically the foam has a thickness of 5 -10 mm, such that the compressible foam provides a soft tactile feel to the panel and levels uneven areas on the surface of the underlying carrier. Lastly, a decorative and non-structural skin is applied on top of the foam layer. The skin has an overall thickness between 1-1.5 mm and is often made from a pliable polyvinyl chloride (PVC), a sprayable urethane elastomer material or a thermoplastic elastomer, thermoplastic olefin, or thermoplastic polyurethane.

Polyvinyl chloride (PVC) skins may be produced using slush molding. A box filled with a particulate PVC slush molding composition positioned beneath a heated mold part, supplies the particulate PVC slush molding composition (powder) to the mold. The mold is repeatedly inverted to melt powder onto the hot mold surface and induce sintering of the PVC particles. After the PVC particles have sintered together, a sheet of plasticized PVC is formed, the sheet or skin is cooled and removed from the mold. Slush molding of PVC compounds is for example disclosed in US-A-4,562,025. An alternative to slush molding for producing PVC skins includes injection molding or extrusion molding. The conventional process, as for example described in US4562025, require a temperature above 230°C (e.g. in the range 230-250°C) to form a plasticized PVC skin. Once plasticized the skin and/or mold needs to be cooled a temperature in the range of 40 - 60°C after which the skin can be removed from the mold. Cooling from more than 230°C to 40 - 60°C requires a substantial amount of time and will subject the mold to excessive wear usually resulting in an early replacement of the mold. And hence, may decrease productivity and/or efficiency of the manufacturing process or may increase cost associated with manufacturing a PVC molded product such as a flexible skin. US4562025 does not disclose a composition that can be manufactured at a lower temperature while maintaining similar mechanical properties like for example tensile strength and/or elongation at break.

Flexible molded PVC skins when used in vehicle panels must however meet stringent criteria, more in particular color stability and dimensional stability at elevated temperature and/or prolonged UV exposure, mechanical properties such as tensile strength and elongation at break, resistance to a wide variety of chemical compounds such as cleaning agents, human fluids, etc.

WO2016/098344 A1 discloses a polyvinyl chloride resin composition having high adhesion to foamed polyurethane molded articles. WO2016/098344 A1 does not disclose how to decrease the molding temperature.

### PURPOSE OF THE INVENTION

The invention is aimed at providing a polyvinyl chloride molding compositions that can be plasticized or form a molded product below 230°C while maintaining mechanical properties needed in typical applications, more in particular mechanical properties such as tensile strength and elongation at break.

The invention is aimed at lowering the molding temperature with at least 20°C, preferably at least 25°C, more preferably at least 30°C, most preferably about 35°C compared to conventional PVC molding composition having molding temperatures of around 235°C while maintaining and/or improving material properties as obtained with a state of the art PVC molding composition.

Further, the invention is aimed at a method for manufacturing a PVC molding composition as well as a process for manufacturing a PVC molded product such as a flexible molded skin.

Furthermore, the invention is aimed at a use of a PVC molded product made with the PVC molding composition according to the invention.

### SUMMARY OF THE INVENTION

The present invention is aimed at a polyvinyl chloride molding composition, preferably a polyvinyl chloride slush molding composition, comprising a polyvinyl chloride resin, a plasticizer and a surfactant selected from a non-ionic surfactant and/or an anionic surfactant having a melting temperature (Tₘ) below 200°C and average molecular weight above 300g/mol optionally in combination with a linear polyester polymer derived from caprolactone monomers and further additives. The linear polymer polyester has an average molecular weight in the range of 15000 to 40000 g/mol, more preferably in the range 15000 to 30000 g/mol, most preferably about 25000 g/mol.

The present invention hence provides a polyvinyl chloride molding composition comprising:
a) At least one polyvinyl chloride resin having a K value ≥ 60;
b) At least one plasticizer;
c) Optionally at least one linear polyester polymer derived from caprolactone monomers and having an average molecular weight in the range of 15000 to 40000 g/mol;
d) At least one surfactant selected from a non-ionic surfactant and/or anionic surfactant having a melting temperature (Tₘ) below the molding temperature, preferably below 200°C and average molecular weight above 300g/mol; and
e) Optionally further additives.
The polyvinyl chloride molding composition according to the invention has the advantage of plasticizing and/or melting at a lower temperature compared to conventional PVC molding composition not comprising the linear polyester polymer derived from polycaprolactone and surfactants according to the invention. In a preferred embodiment, the plasticizing and/or molding temperature is lowered with at least 20°C, preferably at least 25°C, more preferably at least 30°C, most preferably at least 35°C such as about 40°C leading to molding temperatures in the range 190-235°C, preferably in the range 200-235°C, more preferably in the range in the range 200-235°C, most preferably in the range 200-220°C.

Lowering the plasticizing and/or molding temperature of a PVC molding composition has the advantage of reducing energy consumption during the manufacturing process of a PVC-molded product. Additionally, the temperature swing required to obtain a demolding temperature required to remove the molded product from the mold is reduced which advantageously result in avoiding unwanted defects in the mold due to temperature differences.

The inventors found that surprisingly the addition of at least a surfactant selected from a non-ionic surfactant and/or an anionic surfactant having a melting temperature (Tₘ) below 200°C and average molecular weight above 300g/mol, optionally in combination with a linear polyester polymer derived from caprolactone monomers according to the invention to a PVC molding composition creates a surprising effect on the molding temperature, more in particular to lower the required molding temperature during a molding process.

According to preferred embodiments, the addition of a non-ionic and/or an anionic surfactant having a melting temperature (Tₘ) below 200°C and average molecular weight above 300g/mol in combination with a linear polyester polymer derived from caprolactone monomers according to the invention to a PVC molding composition may further create a further synergistic effect on both the properties of the molded product and the molding process.

The non-ionic surfactant according to the invention is preferably selected from a sorbitan based ester, an ethoxylated sorbitan ester, a glycerol monoester and/or a polyethylene glycol (PEG) stearate meeting above criteria of a melting temperature (Tₘ) below 200°C and average molecular weight above 300g/mol.

The anionic surfactant according to the invention is preferably selected from bis(2-ethylhexyl)sulfosuccinate sodium, an alkylbenzene sulfonate, an alpha-olefin sulfonate and/or a sulfosuccinate meeting above criteria of a melting temperature (Tₘ) below 200°C and average molecular weight above 300g/mol.

The linear polymer polyester derived from caprolactone monomers according to the invention is a high molecular weight polyester having an average molecular weight in the range of 15000 to 40000 g/mol, preferably in the range of 15000 to 30000 g/mol, most preferably about 25000 g/mol.

The polyvinyl chloride resin in the PVC molding composition is preferably a low K-value PVC resin, more in particular a PVC resin having a K-value between 60 and 85, preferably between 65 and 75.

Typically the composition may comprise, based on the total weight of polyvinyl chloride molding composition:
- 30 - 60 wt.%, preferably 35 - 55 wt.%, more preferably 40 - 55 wt.% of a polyvinyl chloride resin,
- 20 - 50 wt.%, preferably 35 - 47 wt.%, more preferably 37 - 45 wt.% of a plasticizer,
- 0 - 7.5 wt.%, preferably 2 - 7 wt.%, more preferably 3.5 - 6 wt.% of a linear polyester polymer derived from polycaprolactone monomers,
- 0,5 - 5 wt.%, preferably 1 - 5 wt.%, more preferably 1 - 3.5 wt.% of a non-ionic and/or an anionic surfactant having a melting temperature (Tₘ) below 200°C and average molecular weight above 300g/mol, and
- 0 - 20 wt.%, preferably 1 - 18 wt.%, more preferably 2 - 15 wt.% of further additives selected from conventional additives such as stabilizers, fillers, processing aids, lubricants,....

Providing the surfactant selected from a non-ionic surfactant and/or an anionic surfactant according to the invention to a PVC molding composition has the further advantage of delaying aggregation or early gelation of the composition optionally decreasing waste during the formation of powder, pellet and/or paste.

Further, the invention is aimed at a method for manufacturing a polyvinyl chloride molding composition according the invention, the method comprising the steps of: mixing a polyvinyl chloride resin with, the surfactant according to the invention and at least one additive such as a stabilizer in a hot mixer, followed by providing, when the PVC resin reaches its thermal transition temperature, a plasticizer. Once the plasticizer is mixed with the PVC resin, optionally the linear polyester polymer derived from caprolactone monomers is provided when the process temperature is above the melting temperature of the linear polyester polymer, preferably the processing temperature is above 80°C. Afterwards the mixture is discharged into a cold mixer.

Furthermore, the invention discloses a process for producing a molded product such as a flexible molded skin wherein the temperature difference between the demolding temperature and the molding temperature is below 190°C, preferably below 170°C, most preferably below 150°C. The process comprising at least the steps of: providing the polyvinyl chloride (PVC) molding composition according to the invention to a heated mold of a molding device, the mold, when providing the composition, has a temperature of maximum 230°C and plasticizing or molding the PVC molding composition at a molding temperature such that a molded product is produced; followed by cooling the mold to achieve a cooled mold having a demolding temperature below 60°C, preferably in the range 40-60°C and subsequently removing the molded product from the mold. The molding temperature in the molding process according to the invention is in the range 190-235°C, preferably in the range 200-225°C, more preferably in the range 200-220°C which is at least 20°C, preferably at least 25°C, more preferably at least 30°C, most preferably at least 35°C such as about 40°C lower compared to conventional PVC molding temperatures.

The invention is further intended to produce a polyvinyl chloride polymer (PVC) molded product made using the polyvinyl chloride molding composition according to the invention. In a preferred embodiment the PVC molded product is a flexible molded skin. The flexible molded skins have an elongation at break of at least 250%, preferably at least 280%, more preferably at least 300%, most preferably 350% and/or a tensile strength of at least 7 MPa, preferably at least 8 MPa, more preferably at least 9 MPa, most preferably at least 10 MPa. Both the elongation at strength as well as the tensile strength are measured according to the ISO-527-2 standard using a 5A test bar and a testing speed of 100 mm/min.

In another embodiment, the invention is directed to a use of a flexible molded skin according to the invention in an transportation vehicle interior, preferably a dashboard, preferably an automotive vehicle dashboard.

In a further embodiment the invention is aimed at a laminate. The laminate comprising a rigid carrier, wherein to at least part of one side of the rigid carrier a layer of a polymer foam is adhered, and wherein at least part of a side of the polymer foam layer opposite the side facing the carrier, is adhered to a flexible skin according to the invention.

### DETAILED DESCRIPTION

### Polyvinyl chloride resin

Within the scope of this invention the polyvinyl chloride resin polymers are selected from PVC resins having a K value ≥ 60. The K-value of a PVC resin refers to a measure of its molecular weight and degree of polymerization. It is determined by measuring the viscosity of a diluted solution of PVC resin in a solvent (typically cyclohexanone), according to ISO 1628-2 standards.

The PVC resin according to the invention may optionally comprise (in minor amount) a further compatible polymer chosen from copolymers or terpolymers of vinyl chloride and vinyl acetate (VC/VA) or vinyl chloride and an acrylic derivative (VC/AD) for example lower alkyl acrylates or methacrylates, acrylic and methacrylic acid, thermoplastic polyurethanes (TPUs), thermoplastic polyether esters, ethylene/vinyl monomer (EVA) copolymers, ethylene/vinyl monomer/carbonyl terpolymers, melt-processable acrylic elastomers, copolymers with polyamide blocks and polyether blocks or polyether-block-amides, chlorinated or chlorosulfonated polyethylene's, functionalized or unfunctionalized ethylene/alkyl (meth)acrylate or (meth)acrylic acid polymers, MBS core-shell polymers, SBM block terpolymers, PVDF and powdered polyamide polymers.

The polyvinyl chloride (PVC) resin according to the invention is preferably obtained as a suspension or micro suspension. Preferred PVC resins are those with a K-value between 60 and 85, preferably between 65 and 75.

Particularly preferred PVC resin particles have an average particle size of between 25.0 µm and 300.0 µm, more preferably between 50.0 µm and 300.0 µm. The average particle size of the PVC polymer particles will usually be at least 25.0 µm, more preferably at least 50.0 µm, most preferably at least 75.0 µm, in particular at least 100.0 µm. The average particle size of the PVC polymer particles will usually be below 400.0 µm, preferably maximum 350.0 µm, more preferably maximum 300.0 µm, most preferably maximum 250.0 µm.

The amount of the PVC resin present in the PVC molding composition of this invention may vary within wide ranges between 30 and 60 wt.%, preferably between 35 and 55 wt.%, more preferably between 40 and 55 wt.% with respect to the total weight of the composition.

### Plasticizers

The polyvinyl chloride molding composition further comprises from 20 to 50 wt.% with respect to the total weight of the composition one or more types of plasticizers, preferably the plasticizer is a monomeric and/or polymeric plasticizer. Plasticizers are usually well known to the skilled person. In a preferred embodiment, the amount of plasticizer varies from 35-47 wt.%, preferably from 37-45 wt.% with respect to the total weight of the PVC molding composition. Increasing the amount of plasticizer in the polymer composition beyond the top of these ranges would not only adversely affect processability of the composition but would also increase the elongation at break to undesirable values.

Within the scope of the present invention, a wide variety of plasticizers may be used.

Suitable plasticizers include monomeric esters of typically C8 to C13 alcohols and organic acids which may be saturated or unsaturated and may either be mono- or poly-carboxylic organic acids. Examples of esters suitable for use in the plasticizer of this invention include esters derived from tri-mellitic acid (for example, octyl trimellitate-TMO), sebacic acid (for example dioctyl sebacate-DOS, di-isodecyl sebacate-DIDS), azeleic acid (for example dioctyl azelate-DOZ), adipic acid (for example dioctyl adipate-DOA, di-isodecyl adipate-DIDA, di-tridecyl adipate (DTDA), phthalic acid (for example, dibutyl phthalate-DBP, dioctyl phthalate-DOP, di-undecyl phthalate-DUP, di-tridecyl phthalate-DTDP), citric acid, benzoic acid, glutaric acid, fumaric acid, maleic acid, oleic acid (for example butyl oleate), palmitic acid and acetic acid and mixtures of two or more hereof. Esters of phosphoric acid may also be used. The skilled person will be capable of selecting the appropriate plasticizer considering the temperature at which the composition is to be processed and the volatility of the plasticizer. Preferred are those plasticizers which have a high molecular weight, preferably at least 300, more preferably at least 350.

Examples of alcohols suitable for making the monomeric ester plasticizers, are linear or branched C8 to C14 alcohols. In a preferred embodiment use is made of a C9 fatty alcohol or diol, comprising at least 60 wt.%, or at least 80 wt.%, but maximum 95 wt.% straight-chain alcohols. The concentration of branched C9 alcohols may be maximum 40 wt.%, preferably between 5 and 40 wt.%. The alcohol may contain at least 15 wt.% of branched nonyl alcohols having branching at the 2-carbon position.

The afore mentioned monomeric plasticizers is preferably used in combination with at least one polymeric plasticizer. It is however preferred that the content of the polymeric plasticizer is at least 10 wt.% relative to the total amount of plasticizer present.

Suitable polymeric plasticizers include those obtained from the condensation of a dicarboxylic acid, a tricarboxylic acid or a polycarboxylic acid or a mixture of two or more of the afore mentioned carboxylic acids, with a diol or of a mixture of various carboxylic diacids with one or more diols. Suitable dicarboxylic acids for the preparation of such polymeric plasticizers include phthalic acid, terephthalic acid, adipic acid, sebacic acid, succinic acid, citric acid, trimellitic acid. Other suitable polycarboxylic acids include alicyclic carboxylic acids selected from the group of aromatic tricarboxylic acids and their derivatives, in particular 1,2-cyclohexanedicarboxylic acid, 1,4-cyclohexanedicarboxylic acid, 4-cyclohexene-1,2-dicarboxylic acid, or derivatives thereof. Examples of diols suitable for use in such polymeric plasticizers include for instance. ethylene glycol, propylene glycol, butanediol, hexanediol.

Polymeric plasticizers produced from the afore-mentioned components may be preferred for their reduced volatility, better resistance to environmental damage and superior response to temperature extremes in use, when compared to monomeric plasticizers. Other suitable polymeric plasticizers for use with-the present invention include, in particular a poly-phthalate or a poly-adipate.

In a further embodiment a plasticizer composition which may be used that is substantially free of phthalic acid esters.

The above-mentioned polymeric plasticizers may be preferred for their ability of suppressing the migration of the plasticizers between the PVC skin layer and the foam layer underneath, especially during ageing under the influence of long-time exposure of the skin to heat and/or UV radiation.

### Linear polyester polymer

The linear polyester polymer derived from caprolactone monomers (also referred to as polycaprolacton) is having a molecular weight in the range of 15000 to 40000 g/mol, preferably 15000 to 30000 g/mol, more preferably a linear polyester polymer having an average molecular weight in the range 20000 up to 26000 g/mol such as 25000 g/mol.

According to preferred embodiments, the linear polyester polymer derived from caprolactone monomers is selected from a polycaprolactone polyester polyol having the following structure:

(*C*₆*H*₁₀*O*₂)*ₙ*

Wherein n denotes the degree of polymerization.

While a broad range of molecular weights for polycaprolactone polymers are available experiments have shown that polycaprolactone polymers having a molecular weight in the range of 15000 g/mol to 40000 g/mol work well. While a molecular weight below 15000 g/mol initially show superior results, in time (for example within 2 weeks or even months) and exudation may occur due to a to low compatibility of the free terminal hydroxy groups with the PVC. This exudation is, generally, not accepted in the market. A molecular weight above 40000 g/mol resulted in poor mixing and/or absorbing of the caprolactone with and/or in the PVC compound.

Preferred examples of commercially available polycaprolactone polyester polyols may be purchased from Perstorp under the CAPA^{®} brand, more in particular its 6000 series. Preferred examples (with grade 6250 being particularly preferred) are:
- Capa^{®} 6250: available from Ingevity Corporation is a linear polycaprolactone polyester polyol with an average molecular weight of approximately 25000 g/mol.
- Capa^{®} 6400 available from Ingevity Corporation is a linear polycaprolactone polyester polyol with an average molecular weight of approximately 33000 g/mol
- Capa^{®} 6200 available from Ingevity Corporation is a linear polycaprolactone polyester polyol with an average molecular weight of approximately 20000 g/mol.

It was surprisingly found that the addition of above defined polycaprolactone in combination with the anionic and/or non-ionic surfactant of the present invention in a PVC molding composition is particularly suitable and gives rise to synergistic effects e.g. to further improve the molding process and/or further lower the processing temperature, more in particular lowering the molding temperature during the molding process to obtain molded PVC products such as a flexible skin.

The weight percentage of the polycaprolactone polymer in the PVC molding composition, based on the total weight of the composition, can range from about 0 to about 7.5 wt.%, preferably in the range from 2 to 7 wt.%, more preferably in the range of 3.5 to 6 wt.%.

### Non-ionic and anionic surfactant

The non-ionic and/or an anionic surfactant according to the invention are selected from non-ionic and/or an anionic surfactant compounds having a melting temperature (Tₘ) below 200°C and average molecular weight above 300g/mol. The PVC molding composition according to the invention may comprise mixtures of aforementioned non-ionic and anionic surfactant compounds.

The weight percentage of the non-ionic and/or an anionic surfactants according to the invention in the PVC molding composition, based on the total weight of the composition, can range from about 0.5 to about 5 wt.%, preferably in the range from 1 to 5 wt.%, more preferably in the range of 1 to 3.5 wt.%.

The non-ionic surfactant according to the invention is preferably selected from a sorbitan based ester, an ethoxylated sorbitan ester, a glycerol monoester and/or a polyethylene glycol (PEG) stearate meeting above criteria of a melting temperature (Tₘ) below 200°C and average molecular weight (MW) above 300g/mol.

Non-anionic sorbitan based ester surfactants are preferably selected from a sorbitan monostearate, a sorbitan monolaurate, a sorbitan monopalmitate, a sorbitan monooleate and/or a sorbitan trioleate.

Preferred examples of commercially available sorbitan based ester may be purchased from Croda under the Span^{®} brand. Preferred examples are:
- Span^{®} 20 = Sorbitan Monolaurate (Tₘ=16-22°C, MW ~ 346 g/mol)
- Span^{®} 40 = Sorbitan Monopalmitate (Tₘ=45-50°C, MW ~ 402 g/mol)
- Span^{®} 60 = Sorbitan Monostearate(Tₘ=53-57°C, MW ~ 430 g/mol)
- Span^{®} 80 = Sorbitan Monooleate (Tₘ=4-10°C, MW ~ 428 g/mol)
- Span^{®} 85= Sorbitan Trioleate (Tₘ= ~ 20°C, MW ~ 957 g/mol)

Non-anionic ethoxylated sorbitan ester surfactants are preferably selected from a polyoxyethylene sorbitan monolaurate, a polyoxyethylene sorbitan monopalmitate, a polyoxyethylene sorbitan monostearate or a polyoxyethylene sorbitan monooleate.

Preferred examples of commercially available ethoxylated sorbitan ester surfactants may be purchased from Croda under the Tween^{®} brand. Preferred examples are:
- Tween^{®} 20 = an ethoxylated sorbitan ester derived from lauric acid, also known as Polysorbate 20 (Tₘ~ 0°C, MW ~ 1228 g/mol)
- Tween ^{®} 40 = an ethoxylated sorbitan ester derived from palmitic acid, also known as Polysorbate 40 (Tₘ=14-20°C, MW ~ 1284 g/mol)
- Tween ^{®} 60 = an ethoxylated sorbitan ester derived from stearic acid, also known as Polysorbate 60 (Tₘ=23-28°C, MW ~ 1311 g/mol)
- Tween ^{®} 80= an ethoxylated sorbitan ester derived from oleic acid, also known as Polysorbate 80 (Tₘ ~-10°C, MW ~ 1310 g/mol)
- Tween ^{®} 85= an ethoxylated sorbitan ester derived from oleic acid and stearic acid, also known as Polysorbate 85 (Tₘ~-10°C, MW ~ 1839 g/mol)

Other suitable examples of non-ionic surfactants according to the invention are selected from a glycerol monoester, preferably a glyceryl monooleate, a glyceryl monopalmitate, a glyceryl monostearate (Tₘ = 58-60°C, MW ~ 358 g/mol) and/or a polyethylene glycol (PEG) stearate, preferably a PEG-40 stearate (Tₘ= 44-50°C, MW ~ 2040 g/mol) or PEG-100 stearate (Tₘ = 50-58°C, MW ~ 4600 g/mol).

The anionic surfactant according to the invention is preferably selected from bis(2-ethylhexyl)sulfosuccinate sodium (Tₘ = 153-157°C, MW ~ 444 g/mol), an alkylbenzene sulfonate, preferably a linear C10-C11 alkylbenzene sulfonate, an alpha-olefin sulfonate, preferably a C14-C16 alpha olefin sulfonate, more preferably a sodium C14-16 Olefin Sulfonate and/or a sulfosuccinate, preferably sodium dioctyl sulfosuccinate meeting above criteria of a melting temperature (Tₘ) below 200°C and average molecular weight above 300g/mol.

Anionic surfactants are preferably selected from bis(2-ethylhexyl)sulfosuccinate sodium.

### Additives

The PVC molding composition according to the invention may comprise further additives selected from pigments, fillers, stabilizers (such as UV stabilizers), antioxidants, flame retardants, processing aids, lubricants and/or optionally one or more tear promoting agents.

Preferably the PVC molding composition according to the invention comprises based on the total weight of the composition 0 to 20 wt. %, preferably from 1 to 18 wt. %, more preferably from 2 to 15 wt. % of additives, such as pigments or fillers, stabilizers, antioxidants, processing aids and lubricants and optionally from 0.1 to 7.5 wt. % of one or more tear promoting agents as defined in EP3350255 which is disclosed herein by reference. Materials suitable for use as a tear promoting agent include particulate materials selected from the group of one or more particulate blowing agents, one or more particulate inorganic filler materials, one or more particulate organic filler materials and one or more particulate microspheres or a mixture of two or more of the afore mentioned particulate materials.

Often, minerals such as calcium carbonate, silica, clay, kaolin and carbon are added as fillers to PVC molding compositions, many of these mineral fillers make them easier to mold and shape while ensuring the stability of the compounds. Alternatively glass fibers, talc fibers and/or carbon fillers may be used as fillers.

### EXAMPLES

In the following examples, polyvinyl chloride molding compositions were prepared following the procedure described above. The different amounts of the compounds in the compositions are disclosed in Table 1 below. Further, a flexible molded skin for each composition was produced. The flexible molded skins, having a thickness of about 2 mm, were subjected to elongation and tensile strength evaluations. More specifically, the elongation at break and tensile strength measured according to ISO-527-2 with a 5A test bar and a testing speed of 100 mm/min.
The results show that the mechanical properties for comparative examples CE1 and CE2 (according to conventional PVC molding compositions), more in particular the elongation at break and the tensile strength, decrease drastically when a flexible moulded skin was produced at a temperature below 236°C. More specifically, the elongation at breaks declines to values below 250% or even 200% while the tensile strength decreases to below 7 MPa. As such, skins produced using the composition according to the reference sample at a temperature below 236°C are not suitable for dashboard applications in transportation like for example in automotive.

Also, different PVC resins with a lower K-value (below 60) were tested (not shown), which are known for decreasing the melting and/or plasticizing temperature to produce a PVC moulded product. A lower K-value PVC resin is known for fusing more quickly when subjected to friction and heat during the molding process producing PVC moulded products. However, under the influence of heat and friction, particles fuse together or agglomerate herein before molding, and are therefore no longer suitable for a slush moulding process and are sieved off as scrap. Hence, lower the K-value PVC resins, typically having a lower molecular weight may be confronted with easier fusing but drastically limit the molding composition for practical and/or economic reasons.

When providing a PVC molding composition according to the invention comprising a linear polyester polymer derived from polycaprolactone in a PVC molding composition in combination with the non-ionic or anionic surfactant of the present invention (here in the examples illustrated by means of Span^{®} 60), it was surprisingly found that the molding temperature can be lowered towards 200°C while maintaining mechanical properties such as elongation at break and tensile strength. This is surprising seen the fact that it was expected that especially the addition of polycaprolactone, known for an endothermic phase transition, would require additional energy and therefore worsening, rather than improving the molding process. The results are summarized in below Table 1.

Furthermore, the composition comprising linear polyester polymer derived from a polycaprolactone and the non-ionic or anionic surfactant of the present invention has been evaluated to investigate the effect on scalability. Results have shown that the non-ionic (or anionic) surfactant of the present invention can delay the onset of plasticizing the PVC molding composition and therefore can improve the yield of the PVC molding process.

**Table 1: Composition polyvinyl chloride molding composition with tensile strength [MPa] and elongation at break [%] results**

| | | **CE1** | **CE2** | **Inv.1** | **Inv 2** |
|---|---|---|---|---|---|
| **Polyvinyl Chloride Resin** (60 < K-value < 75) | **Average particle size between 25 and 300 µm** | 44.79% | 44.57% | 41.87% | 41.68% |
| | **Average particle size < 25 µm** | 4.98% | 4.96% | 4.66% | 4.63% |
| **Caprolactone** | **CAPA^{®} 6250 Mw ~ 25000 g/mol** | - | - | 4.65% | 4.63% |
| **Plasticizer** | **Polimix** | 34.84% | 37.14% | 32.57% | 34.73% |
| | **Drapex** | 1.49% | 1.49% | 1.40% | 1.39% |
| | **DIDS*** | 6.47% | - | 6.05% | - |
| | **TOTM²** | 2.63% | 7.32 | 2.45% | 6.84% |
| **Sorbitan monostearate (Span^{®} 60)** | | - | - | 1.86% | 1.85% |
| **Additive** | **Filler** | 2.49% | 2.34% | 2.48% | 2.32% |
| | **Stabilisator** | 1.83% | 1.71% | 1.56% | 1.46% |
| | **Pigment** | 0.50% | 0.47% | 0.50% | 0.46% |
| | | | | | |
| **Tensile strength [Mpa]** | 236°C | 11.4 | 12.4 | 11.3 | 10 |
| | 220°C | 11 | 12.2 | 11.3 | 11.4 |
| | 210°C | 8.4 | 11.9 | 10.5 | 10.9 |
| | 200°C | 6.1 | 6.2 | 8.6 | 9.4 |
| **Elongation at break [%]** | 236°C | 324 | 336 | 381 | 360 |
| | 220°C | 303 | 310 | 362 | 397 |
| | 210°C | 241 | 313 | 344 | 386 |
| | 200°C | 189 | 178 | 313 | 343 |

| | | | | | |
|---|---|---|---|---|---|
| *Diisodecyl sebacate ² Trioctyl Trimellitate | | | | | |

## Claims

1. A polyvinyl chloride molding composition comprising:
a) At least one polyvinyl chloride resin having a K value ≥ 60;
b) At least one plasticizer;
c) Optionally at least one a linear polyester polymer derived from caprolactone monomers and having an average molecular weight in the range of 15000 to 40000 g/mol;
d) At least one surfactant selected from a non-ionic surfactant and/or anionic surfactant having a melting temperature (Tₘ) below the molding temperature, preferably below 200°C and average molecular weight above 300g/mol; and
e) Optionally further additives.

2. The polyvinyl chloride molding composition according to claim 1, wherein the composition is a polyvinyl chloride slush molding composition.

3. The polyvinyl chloride molding composition according to claim 1 or claim 2, wherein the non-ionic surfactant is selected from
- a sorbitan based surfactant, preferably a sorbitan monostearate, a sorbitan monolaurate, a sorbitan monopalmitate, a sorbitan monooleate and/or a sorbitan trioleate,
- an ethoxylated sorbitan ester, preferably a polyoxyethylene sorbitan monolaurate, a polyoxyethylene sorbitan monopalmitate, a polyoxyethylene sorbitan monostearate or a polyoxyethylene sorbitan monooleate,
- a glycerol monoester, preferably a glyceryl monooleate, a glyceryl monopalmitate, a glyceryl monostearate or a glycerol monostearate,
- a polyethylene glycol (PEG) stearate, preferably a PEG-40 stearate or PEG-100 stearate.

4. The polyvinyl chloride molding composition according to any of foregoing claims wherein the anionic surfactant is selected from
- bis(2-ethylhexyl)sulfosuccinate sodium,
- an alkylbenzene sulfonate, preferably a linear C10-C11 alkylbenzene sulfonate,
- an alpha-olefin sulfonate, preferably a C14-C16 alpha olefin sulfonate, more preferably a sodium C14-16 Olefin Sulfonate, and/or,
- a sulfosuccinate, preferably sodium dioctyl sulfosuccinate.

5. The polyvinyl chloride molding composition according to any of foregoing claims wherein the linear polyester polymer derived from caprolactone monomers is having an average molecular weight in the range 15000 to 30000 g/mol, more preferably in the range 20000 up to 26000 g/mol, most preferably around 25000 g/mol.

6. The polyvinyl chloride molding composition according to any of foregoing claims, wherein the polyvinyl chloride resin has a K-value between 60 and 85, preferably between 65 and 75.

7. The polyvinyl chloride molding composition according to any of foregoing claims, wherein the polyvinyl molding composition comprises a linear polyester polymer derived from caprolactone monomers having an average molecular weight in the range of 15000 to 40000 g/mol and a surfactant selected from a non-ionic surfactant and/or an anionic surfactant having a melting temperature (Tm) below the molding temperature, preferably below 200°C and average molecular weight above 300g/mol, preferably the surfactant is selected from at least a sorbitan monostearate and/or a sorbitan monooleate and the linear polyester polymer derived from caprolactone monomers having an average molecular weight in the range 20000 up to 26000 g/mol.

8. The polyvinyl chloride molding composition according any of foregoing claims, wherein the plasticizer is a monomeric and/or a polymeric plasticizer, preferably selected from a polyester.

9. The polyvinyl chloride molding composition according any of foregoing claims, wherein the composition comprises, based on the total weight of polyvinyl chloride molding composition:
a) 30 - 60 wt.%, preferably 35 - 55 wt.%, more preferably 40-55 wt.% of a polyvinyl chloride resin;
b) 20 - 50 wt.%, preferably 35 - 47 wt.%, more preferably from 37-45 wt.% of at least one plasticizer;
c) 0 - 7.5 wt.%, preferably 2 - 7 wt.%, more preferably 3.5 - 6 wt% of a linear polyester polymer derived from caprolactone monomers;
d) 0.5 - 5 wt.%, preferably 1 - 5 wt.%, more preferably 1 to 3.5 wt.% of a surfactant selected from a non-ionic surfactant and/or an anionic surfactant;
e) 0 - 20 wt.%, preferably 3 - 15 wt.% of additives.

10. The polyvinyl chloride molding composition according to any of foregoing claims, wherein the composition is a powder, a pellet or a paste, preferably a powder.

11. A method for manufacturing the polyvinyl chloride molding composition according to any of foregoing claims, the method comprising at least the step of mixing the ingredients a) to e) at a temperature of at least the thermal transition temperature (Tg) of the polyvinyl chloride resin and thereafter cooling the mixture.

12. The method according to claim 11 comprising the steps of :
- Providing the polyvinyl chloride resin;
- Mixing the polyvinyl chloride resin with the at least one surfactant selected from a non-ionic surfactant and/or an anionic surfactant and optional additives such as a stabilizer, fillers, pigments, anti-oxidants, processing aids and/or tear promoting agents;
- Adding, when the mixture reaches the thermal transition temperature (Tg) of the vinyl chloride resin, the plasticizer to the mixer;
- Adding the linear polyester polymer derived from caprolactone monomers and optional further additives at a temperature above the melting temperature of said polyester polymer, preferably above 80°C to the mixer;
- discharging the mixture and cooling the mixture, preferably towards room temperature.

13. A process for producing a molded product such as a flexible molded skin thereby lowering the molding temperature with at least 20°C, the process comprising the steps of:
a. providing a polyvinyl chloride molding composition according to any of the claims 1 - 10;
b. supplying the molding composition to a heated mold;
c. plasticizing or melting the molding composition at a molding temperature such that a molded product is produced;
d. cooling the mold to achieve a cooled mold having a demolding temperature below 60°C, preferably in the range 40-60°C;
e. removing the molded product from the mold.
wherein the temperature difference between the demolding temperature and the molding temperature is below 190°C, preferably below 170°C, most preferably below 150°C.

14. The process according to claim 13, wherein the molding temperature is in the range 190-235°C, preferably in the range 200-225°C, more preferably in the range 200-220°C.

15. A flexible molded skin made according to any of claims 13-14.

16. The flexible molded skin according to claim 15, having an elongation at break, measured according to ISO-527-2 with 5A test bar of at least 250%, more preferably at least 300%, most preferably at least 350%.

17. The flexible molded skin according to claim 15 or claim 16, having a tensile strength, measured according to ISO-527-2 with a 5A test bar, of least 7 MPa; preferably at least 8 MPa, more preferably at least 9 MPa, most preferably at least 10 MPa.

18. The flexible molded skin according to any of claims 15 - 17, molded at a molding temperature in the range 200-235°C, preferably in the range 200-225°C, more preferably in the range 200-220°C having a tensile strength, measured according to ISO-527-2 with a 5A test bar of least 8 MPa, preferably at least 10 MPa and an elongation at break, measured according to ISO-527-2 with 5A test bar of at least 300%.

19. Use of a flexible molded skin according to any of the claims 15 - 18 in an transportation vehicle interior, preferably a dashboard, preferably an automotive vehicle dashboard.

20. A laminate, comprising a rigid carrier, wherein to at least part of one side of the rigid carrier a layer of a polymer foam is adhered, and wherein at least part of a side of the polymer foam layer opposite the side facing the carrier, is adhered to a flexible molded skin according to any of the claims 15 - 18.
